(19) Europäisches Patentamt
European Patent Office
Office européen des brevets

(11) EP 4 684 861 A1

(12) **EUROPEAN PATENT APPLICATION**

(43) Date of publication:
**28.01.2026 Bulletin 2026/05**

(21) Application number: **24189940.0**

(22) Date of filing: **22.07.2024**

(51) International Patent Classification (IPC):
***B01D 39/08*** *(2006.01)* ***B01D 39/16*** *(2006.01)*

(52) Cooperative Patent Classification (CPC):
**B01D 39/1623; B01D 39/083;** B01D 2239/0407; B01D 2239/0442; B01D 2239/0609; B01D 2239/0613; B01D 2239/0618; B01D 2239/0627; B01D 2239/065; B01D 2239/0654; B01D 2239/1291

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Carl Freudenberg KG**
**69469 Weinheim (DE)**

(72) Inventors:
- **Kotnik Oven, Jana**
  **1218 Komenda (SI)**
- **Urbanc, Da a**
  **4208 en ur (SI)**
- **Ka Kali nik, Karla**
  **1242 Stahovica (SI)**
- **Vasilijevi , Jelena**
  **1000 Ljubljana (SI)**

(54) **ANTIVIRAL AND ANTIALLERGEN CARBON MEDIA**

(57) The present invention refers to a filter medium that comprises (i) at least one nonwoven carrier material, comprising a sheet-like material; and (ii) a functional layer, comprising at least one antiallergen agent, selected from polyphenols, and at least one antiviral agent, selected from fruit acids having a pka1 value of 0 to 7. The invention further refers to a method for depleting viruses and allergens from air or other gases, the method comprising (a) introducing air or gas enriched with viruses and/or allergens into a filter device comprising at least one filter medium as defined above, (b) passing the air or gas through the filter medium or bringing the air or gas into contact with the filter medium to obtain air depleted of viruses and/or allergens or gas depleted of viruses and/or allergens, (c) releasing the air depleted of viruses and/or allergens or the gas depleted of viruses and/or allergens from the filter device. Another aspect of the invention is the use of a filter medium as defined above for depleting viruses and/or allergens from air and other gases. The invention also deals with a filter arrangement comprising a filter medium as defined above.

Figure 1:

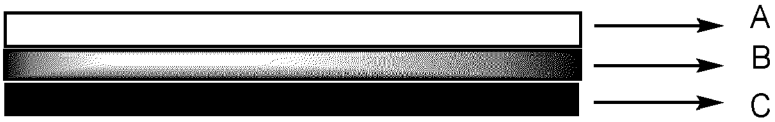


EP 4 684 861 A1

Processed by Luminess, 75001 PARIS (FR)

## Description

The present invention relates to a filter medium comprising at least one antiviral agent and at least one antiallergen agent. The invention further relates to a method for depleting viruses and allergens from air or other gases. The invention further relates to the use of the filter medium according to the invention.

BACKGROUND OF THE INVENTION

It is known to use filtration systems in ventilation systems, e.g., of buildings or vehicles, to reduce the air content of undesirable particulate components, such as allergenic components and pathogenic microorganisms.

Allergens are substances that are recognized by the immune system as "foreign" and are consequently controlled to protect the organism against a possible disease. If certain regulatory mechanisms of the immune system are disturbed, excessive reactions to actually harmless allergens occur with the typical symptoms of an allergy, such as rhinitis allergic or allergic bronchial asthma. Statistics show that the number of persons affected by hypersensitivity responses triggered by allergens increases from year to year. A plurality of allergens is transmitted by air and absorbed by breathing. Such inhalation allergens (i.e., aeroallergens) may be of plant, animal, or human origin (e.g., chemical). These include pollen, fungal spores, flour, wood dust, house dust, animal mite droppings, animal hair, etc. Significant causes of allergies are grass and birch pollen. The number of people affected by massive allergic reactions, and asthmatics in particular, is continuously increasing, so there is a continued need for filter systems that reliably remove allergens from indoor air or reduce their allergenic effect.

Pathogens are microorganisms or subcellular exciters that cause harmful processes in other organisms. These may be bacteria, viruses or fungi, among other.

Viruses are infectious organic structures that spread as virions outside cells (i.e., extracellular) by transmission, but viruses can only replicate within a suitable host cell (i.e., intracellular). The viruses themselves do not consist of one or more cells. All viruses contain the program for their replication and propagation (some viruses also contain other auxiliary components) but have neither independent replication nor their own metabolism and are therefore dependent on the metabolism of a host cell. The viruses attach to surface molecules of the host cells and introduce their genetic material into them. This penetrates into the cell nucleus and alters the cell's own DNA. A possibly massive replication of the virus body (genome and proteins) occurs in the infected cell by the existing cell organelles.

A viral particle outside of cells is referred to as virion. Virions are particles that contain nucleic acids - either deoxyribonucleic acids (DNA) or ribonucleic acids (RNA) - and usually have an enclosing protein capsule (i.e., capsid). However, a capsule is lacking, for example, in the influenza virus, which instead has a ribonucleoprotein. Some virions additionally possess an encapsulation through a biomembrane whose lipid bilayer is interspersed with viral membrane proteins. This is called the viral envelope. Viruses that temporarily, i.e. until the start of the replication phase, have a viral envelope in addition to the capsid are called enveloped, viruses without such an envelope are called non-enveloped.

The diameter of virions is in a range of about 15 nm (e.g., Circoviridae) to 440 nm (e.g., Megavirus chilensis). Virions are significantly smaller than bacteria, but slightly larger than viroids, which have neither a capsid nor a viral envelope.

Coronaviruses (CoV) are "enveloped viruses" that belong to the subfamily Coronavirinae in the family Coronaviridae. They can cause illnesses ranging from the common cold to more severe diseases such as Middle East Respiratory Syndrome (MERS-CoV) or Severe Acute Respiratory Syndrome (SARS-CoV). The novel coronavirus SARS-CoV-2 is a new strain that has not been detected in humans in the past.

US2017/0120178 describes a filter material for removing allergens from air. The filter material comprises an acid-functionalized layer comprising a fruit acid and a fatty acid. It has been found that washing out of the fruit acid is reduced by the fatty acids.

Filter materials are known from the prior art not only for purifying the air of allergens but also from pathogens.

US 2022/0008854 and US2022/0152533 relate to a filter medium for depleting viral pathogens and/or allergens from the air and other gases, comprising at least one acid-functionalized layer comprising at least one fruit acid and at least one fatty acid.

WO2018/225062 describes a filter medium based on a cationic ion exchanger and an anti-pathogenic substance, e.g., polyphenols. The ion exchanger forms an acidic environment with water, which in combination with the anti-pathogenic substance is harmful to some microorganisms. It is explicitly mentioned that the acidic protons reduce or stop the biological activity of bacteria, germs, fungi, and algae (and not viruses). It is the intention to solve the problem that arises with filter media, especially in vehicle air conditioning systems, in that these special microorganisms can multiply in the filter material itself. This is different from viral pathogens, which are only biologically active and able to replicate in the presence of host cells.

To clean the air of viral pathogens, it is known to use filter masks for the field of single respiratory protection applications. Individual filter materials for cleaning the air in stationary and mobile air treatment systems (e.g., filter

systems for room air cleaning or vehicle air conditioning) are also known from the prior art.

WO2015/091822 describes a filter medium, in particular for filtering air for the interior of motor vehicles, comprising an antimicrobial and an antiallergenic substance. The antimicrobial substance is selected from a variety of different compounds, such as metals and metal compounds, etc. Polyphenols are the preferred antiallergenic substances. The filter medium should be able to kill microorganisms, especially fungi and fungal spores, and at the same time should effectively prevent fouling of the filter medium by bacteria, fungi, and other microorganisms.

U.S. Pat. No. 5,888,527 describes an antifungal, antibacterial and antiviral filter comprising a dust-collecting filter fleece with a finish of a tea extract. This filter should be capable of binding and inactivating viruses and preventing them from spreading again.

DE 10 2015 103 284 describes a vacuum cleaner filter bag which has one or more non-woven filter layers as a wall material. The vacuum cleaner filter bag further comprises an antimicrobial material, which may be incorporated, for example, in one of the non-woven filter layers or may be located in an additional insert forming a type of bag, reservoir or sachet inside the vacuum cleaner filter bag. The antimicrobial material is selected from lactic acid, citric acid, tartaric acid, oxalic acid, salicylic acid or derivatives thereof. However, no information is provided on the amount of antimicrobial material used. The essence of the teaching of this document is that when the vacuum cleaner is started up, the liner or filter fleece layer in the dust bag, in which the incorporated antimicrobial materials are located, ruptures and thus the material is distributed inside the dust bag.

US 2013/0183879 describes a composition for the deactivation of allergens, containing diphenyl oxide disulfonate compounds (I)

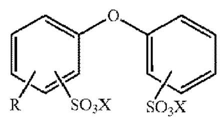

as allergen deactivating agent. In addition, the composition may contain further auxiliary agents, such as organic acids, EDTA and $C_1$-$C_6$ alcohols. The organic acids serve to enhance the anti-allergenic effect by lowering the pH value. This in turn is said to promote the allergen deactivation efficiency of the diphenyl oxide disulfonate compounds. The substance for deactivating allergens can be used in or on a filler, fabric, non-woven or other fiber material (i.e., a carrier material), specifically mentioning a spray application on filters of air conditioning systems and for the interior of motor vehicles. The acid is used in an amount of 0.5 wt. % to 50 wt. % relative to the composition. In the example section, especially in comparative example 1 (Table 1), it is shown that the use of the acid alone (with EDTA and alcohol) without the compound of formula (I) leads to very poor removal of allergens. Furthermore, examples 1 to 6 (Table 1) show that the efficiency of allergen removal depends on the number of carbons of the radical R and on whether the side chain R is branched or linear.

There is currently an immense demand for filter media that are suitable for effectively removing pathogens and allergens from the air or other gases. This applies in particular to filter media that are suitable for effectively reducing the content of pathogenic viruses in the air, especially coronaviruses, such as SARS-CoV-2 or MERS-CoV, and influenza viruses, such as the influenza virus A variant H1 N1, respiratory viruses and rhinoviruses.

The disclosure addresses a need based on the task of providing a filter medium that can be used to remove pathogens and allergens from air and other gases. In particular, the pathogens and allergens should not only be separated on and/or in the filter medium, but also inactivated. On the one hand, this has the advantage that even if the air exiting the filter medium still contains pathogenic/allergenic material, it is inactivated and no longer pathogenic/allergenic. In addition, the loaded filter medium also essentially contains no more pathogenic/allergenic material. In addition, the filter medium should specifically have a bactericidal effect and thus remain hygienic and odorless for a long period of time.

Accordingly, it is an object of the invention to provide an improved filter medium, in particular a filter medium that can be used to remove pathogens and allergens from air and other gases. Further, it is an object of the invention to provide a filter element and/or an improved filter arrangement.

The problem underlying the invention is solved by the filter medium and filter arrangement according to the invention.

## SUMMARY OF THE INVENTION

The invention relates to a filter medium, comprising

- at least one carrier material, comprising a sheet-like filter material;
- a functional layer, comprising at least one antiviral agent, selected from fruit acids having a pka1 value of 0 to 7 and at least one antiallergen agent, selected from polyphenols.

The filter medium according to claim 1, which is free of $C_8$ to $C_{18}$ fatty acids, esters of $C_8$ to $C_{18}$ fatty acids, amides of $C_8$ to $C_{18}$ fatty acids and mixtures thereof.

The invention further relates to a method for depleting viruses and allergens from air or other gases, the method comprising:

introducing air or gas enriched with viruses and/or allergens into a filter device comprising at least one filter medium as defined herein,

passing the air or gas through the filter medium or bringing the air or gas into contact with the filter medium to obtain air depleted of viruses and/or allergens or gas depleted of viruses and/or allergens,

releasing the air depleted of viruses and/or allergens or the gas depleted of viruses and/or allergens from the filter device.

The invention further relates to a use of a filter medium as defined above and below, for depleting viruses and/or allergens from air and other gases.

DESCRIPTION OF THE INVENTION

Within the meaning of the present disclosure, depletion of pathogens and allergens is also understood to mean their inactivation. Air or other gases containing pathogens and/or allergens are passed through the filter medium. In this process, at least part of the pathogens/allergens contained in the air or gas are bound by the filter medium, thus reducing the pathogen/allergen concentration by physical separation. In addition, at least some of the pathogens/allergens contained in the air or gas are inactivated by contact with the functional layer(s) (i.e., chemical deactivation), so that they are no longer allergenic or pathogenically active. Even if this proportion of inactivated pathogens/allergens is not completely retained in the filter medium, inactivation also reduces the concentration of pathogens/allergens in the air or gas. By means of the filter medium according to the invention, air or gases can be obtained which are free of pathogens and allergens or contain them in a concentration which is so low that an allergic reaction or an infection of people after contact, especially inhalation of this air or gases, or even after a longer stay in rooms containing this air or gases, is excluded. Pathogens and allergens are essentially completely removed by the filter medium according to the invention.

Preferably, in the case of air or gases laden with pathogenic viruses, a viral pathogen reduction factor of preferably >3.0 log levels, particularly preferably >5.0 log levels, is achieved by contacting the filter medium. This reduction in the pathogenicity is based on the deactivation of the viruses by the functional layer comprising fruit acids. The determination of anti-viral properties can be performed according to ISO 18184:2019-06 for the determination of the anti-viral activity of textile products or comparable methods. Measurement of the deactivating ability of the filter media of the invention to specific allergens can be performed by ELISA (enzyme-linked immunosorbant assay) assays, where the allergen concentration can be measured by measuring the color change due to an antigen-antibody reaction. The measurement of the deactivation capacity of the filter media according to the invention with respect to certain allergens can be carried out according to the ISO 20743:2013 standard. Preferably, in the case of air or gases laden with allergens, the allergens can be reduced by at least 60%, preferably at least 98 %, by contacting the filter medium. This reduction is based on the deactivation of the allergens by the functional layer comprising polyphenols.

The filter medium according to the invention is generally suitable for depleting pathogens, in particular viruses and bacteria, and allergens from a gas or a mixture of two or more different gases. A preferred gas mixture is air. The filter medium according to the invention is also advantageously suitable for depleting pathogens, in particular viruses and allergens, from respirable gas mixtures other than air. Such breathable gas mixtures preferably contain oxygen and at least one inert gas which is not involved in the metabolic processes and serves to dilute the oxygen. Suitable inert gases are nitrogen, helium, neon and hydrogen.

Nonwoven fabrics, woven fabrics, knitted fabrics and/or papers can preferably be used as carrier materials for the functional layer. Thus, an embodiment which is particularly preferred according to the invention comprises the formation of the functional layer as an impregnated and/or coated non-woven fabric, as an impregnated and/or coated woven fabric, as an impregnated and/or coated knitted fabric and/or as an impregnated and/or coated paper. In this respect, the use of a non-woven fabric as carrier materials for the functional layer is particularly preferred according to the invention.

For the purposes of the invention, the term nonwoven as used herein relates to a fabric consisting of fibers of limited length, continuous fibers (filaments) or cut yarns of any type and of any origin which have in some way been joined together to form a fibrous layer or a fibrous web and have in some way been connected to one another; excluded therefrom is the interlacing or interweaving of yarns, as occurs during weaving, warp-knitting, knitting, lace-making, braiding and the production of tufted products. Nonwovens do in particular not include films and papers.

Carrier layer

In a preferred embodiment of the invention, the carrier material for the functional layer comprises or consists of a nonwoven fabric, selected from spunbonded nonwovens. A preferred embodiment is spunbonded non-wovens having an average fiber diameter within a range of 20 to 70 μm, preferably from 20 to 60 μm, in particular from 20 to 50 μm. A further preferred embodiment is staple fiber non-wovens having an average fiber diameter of 5 to 60 μm, preferably from 10 to 50 μm, in particular from 10 to 35 μm. Preferably, the spunbonded non-wovens have an average fiber length of 10 to 100 mm, preferably 30 to 80 mm or 10 to 50 μm. In a further preferred embodiment, the carrier material for the functional layer comprises or consists of a nonwoven fabric selected from melt-blown nonwovens having an average fiber diameter of 1 μm to 10 μm. In a particular preferred embodiment, the carrier material for the functional layer comprises or consists of a needle punched non-woven fabric.

Preferably, the carrier material for the functional layer comprises or consists of a nonwoven fabric having a base weight (weight per unit area) of at least 20 g/m$^2$. Preferably, the base weight is in a range of 20 to 200 g/m$^2$, in particular 40 to 120 g/m$^2$. The weight per unit area can be determined in accordance with DIN EN 29073-1:1992-08.

Functional layer

The filter medium according to the invention comprises a functional layer comprising at least one antiallergen agent and at least one antiviral agent.

Preferably, is functional layer biofunctional. The term "biofunctional" is understood in the sense of the invention that the antiallergen agent and/or the antiviral agent are from a natural source. Preferably, the antiallergen agent and/or the antiviral agent are from a renewable source.

Viruses in terms of the invention are enveloped and non-enveloped viruses.

Enveloped viruses are preferably selected from among Coronaviridae, Orthomyxoviridae and Pneumoviridae.

Coronaviridae are preferably selected from among coronavirus 229E (HCoV-229E), coronavirus NL63 (HCoV-NL63), coronavirus 0C43 (HCoV-OC43), coronavirus HKU1 (HCoV-HKU1), MERS-CoV (Middle East respiratory syndrome-related coronavirus) and SARS-associated coronavirus (SARS-CoV)-with subtype SARS-CoV-2, in particular COVID-19.

Orthomyxoviridae are preferably selected from among Influenza virus A, Influenza virus B, Influenza virus C and Influenza virus D.

Influenza virus A is specifically Influenza virus A variant H1N1, Influenza virus A variant H3N2, Influenza virus A variant H5N1.

Influenza virus B is specifically Influenza virus B/Victoria Line and Influenza virus B/Yamagata Line.

Pneumoviridae are specifically respiratory syncytial virus (HRSV) (type A, B) and metapneumovirus (HMPV) (type A1 to 2, B1 to 2).

Non-enveloped viruses are specifically selected from among Picornaviridae.

Picornaviridae are specifically selected from among Coxsackievirus A/B, Coxsackievirus B1 (CVB-1), echovirus, enterovirus and rhinovirus.

Rhinoviruses are specifically rhinoviruses-1 A (HRV-1 A), 1 B to 100.

In a preferred embodiment the virus depleted from the air and gases by the filter medium according to the invention is selected from Coronaviridae and Orthomyxoviridae, in particular selected from SARS-associated coronavirus, the Middle East respiratory syndrome-related coronavirus (MERS-CoV) and Influenza virus A, specifically for selected from SARS-CoV-2, MERS-CoV and Influenza virus A variant H1N1.

The functional layer comprises at least one antiviral agent, selected from fruit acids having a pka1 value of 0 to 7.

The pKa value (acid constant) is a measure of the strength of an acid. Acidity is all the more, the lower its pKa value.

The pKa values can be determined via acid base titrations and the determination of the pH at the half equivalent point. Here, the acid and its corresponding base are present in the same concentration. At this point, the following follows from the Henderson Hasselbalch equation: pH=pKa.

The antiviral agent preferably has a pka1 value of 1.0 to 5.0, in particular of 2.0 to 4.0 and in particular of 2.5 to 4.0.

In a preferred embodiment, the antiviral agent comprises a fruit acid.

Fruit acids are organic hydroxycarboxylic acids, dicarboxylic acids and tricarboxylic acids, wherein some fruit acids can be assigned to both the hydroxycarboxylic acids and dicarboxylic acids or tricarboxylic acids.

Suitable hydroxy acids are selected from among fumaric acid, gluconic acid, glycolic acid, mandelic acid, lactic acid, salicylic acid, α-hydroxycaprylic acid, and mixtures thereof.

Suitable dicarboxylic acids are selected from among malic acid, oxalic acid, tartaric acid and mixtures thereof.

A preferred tricarboxylic acid is citric acid.

In another embodiment, the antiviral agent is selected from among malic acid, citric acid, fumaric acid, gluconic

acid, glycolic acid, mandelic acid, lactic acid, oxalic acid, salicylic acid, a-hydroxycaprylic acid, tartaric acid, and mixtures thereof. More preferably, the antiviral agent comprises or consists of citric acid.

Preferably, the functional layer contains the antiviral agent in an amount from 3 wt % to 30 wt %, based on the total weight of the functional layer, preferably from 2 wt % to 20 wt %, even more preferably from 7 wt % to 18 wt %, more preferably from 8 wt % to 15 wt % and in particular from 9 wt % to 12 wt % based in each case on the total weight of the functional layer.

An allergen is any substance that can cause an allergic reaction and includes (house) dust mites, pollens, animal fur, skin debris, drugs, vegetable fibers, bacteria, foods, hair dying agents, chemicals and so on. Among these common allergens, dust mites are believed to trigger an allergic reaction when their excrement is exposed to the human body through breathing or direct skin contact. Fur and skin debris of animals (e.g. pets) may also act as allergens. However, pollens are believed to be the most common allergens. When pollens in the air are exposed to the body through the eyes, nose, lungs, or skin, an allergic reaction can be triggered. In particular, the inhalation of pollens through the nose or mouth can trigger a type of seasonal allergic rhinitis called a pollen allergy.

In a preferred embodiment the allergen depleted from the air and gases by the filter medium according to the invention are pollens, in particular tree pollens, especially birch pollens.

The functional layer comprises at least one antiallergen agent selected from polyphenols.

The term polyphenol in the sense of the invention refers to compounds having a polyphenol structure, i.e., containing several hydroxyl groups on aromatic rings.

Preferably, the polyphenols contain at least 5 phenolic hydroxyl groups, more preferably at least 7 phenolic hydroxyl groups, in particular at least 12 phenolic hydroxyl groups, especially at least 20 phenolic hydroxyl groups.

In one embodiment, the polyphenols are selected from flavonoids, tannins, derivatives of flavonoids and tannins and mixtures thereof. Preferably the polyphenols are selected from tannins and derivatives thereof, in particular tannins (also known as tannic acid).

Flavonoids are a class of polyphenolic secondary metabolites found in plants. They are preferably selected from anthocyanidine, catechines, proanthocyanidines and mixtures thereof.

Tannins (or tannoids) are a class of astringent, polyphenolic biomolecules that bind to and precipitate proteins and various other organic compounds including amino acids and alkaloids.

In the sense of the present invention no distinction is made between tannins and tannin (tannic acid), they are used synonymously and are understood in the broadest sense of their definition.

More preferably, the antiallergen agent comprises or consists of tannine also called tannic acid.

Preferably, the functional layer contains the antiallergen agent in an amount from3 wt % to 30 wt % based on the total weight of the functional layer, preferably from 2 wt % to 20 wt %, even more preferably from 7 wt % to 18 wt %, more preferably from 8 wt % to 15 wt % and in particular from 9 wt % to 12 wt % based in each case on the total weight of the functional layer.

As mentioned above, the functional layer comprises at least one antiallergene agent and at least one antiviral agent. The at least one antiallergene agent and at least one antiviral agent can be present in at least one layer or in at least two distinct layers, preferably the at least one antiallergene agent and at least one antiviral agent are present in at least two distinct layers.

To produce the functional layer according to the invention, a can be coated and/or impregnated with at least one antiviral agent selected from fruit acids having a pka1 value of 0 to 7 and at least one antiallergen agent, selected from polyphenols. Preferably, carrier material is coated with at least one antiviral agent selected from fruit acids having a pka1 value of 0 to 7 and at least one antiallergen agent, selected from polyphenols.

The functional layer according to the invention can be provided with the antiviral agent and antiallergen agent in various ways known to the person skilled in the art, such as by means of coating and/or impregnation, for example, panning, padding, spraying and/or dipping. The functional layer according to the invention can thus be coated and/or impregnated in a simple manner with a solution and/or suspension containing the antiviral agent and antiallergen agent.

The coating step and and/or impregnating step can be performed in one step or in at least two steps.

If the carrier material is coated and/or impregnated in one step the antiviral agent and the antiallergen agent is applied at the same time. As a result, the at least one antiallergene agent and at least one antiviral agent is present in at least one layer.

If the carrier material is coated and/or impregnated in at least two steps the antiviral agent and the antiallergen agent is applied successively. It does not matter whether the antiallergenic agent or the antiviral agent is applied first, followed by the agent that has not yet been applied.

As a result, the at least one antiallergene agent and at least one antiviral agent is present in at least two distinct layers.

Preferably, the carrier material is treated by rotary screen-printing technology coating/impregnating, in particular coating, in order to functionalize the functional layer with the antiviral agent and antiallergen agent.

Likewise conceivable is the impregnation and/or coating of the functional layer with a mixture of at one adhesive.

For example, the functional layer may comprise a thermoplastic adhesive containing the antiviral agent and antiallergen agent.

In a further embodiment, the antiviral agent and/or the antiallergen agent is used in solid form to produce the functional layer. In one embodiment the antiviral agent and/or the antiallergen agent is in the form of a pourable or free-flowing solid to produce the functional layer. In this case, the antiviral agent and/or the antiallergen agent can be sprinkled dry into the carrier material. The thus resulting filter media have the advantage of being simple to produce since the pourable or free-flowing solid is simple to handle.

In particular, the free-flowing antiviral agent and/or the antiallergen agent is a granulate. Suitable granules are in the form of a powder, spheres, granules, particles, dust or mixtures thereof.

In a further embodiment, the antiviral agent and/or the antiallergen agent is used in the form of a liquid preparation (e.g., solution or dispersion) for producing the functional layer. In one embodiment the antiviral agent and/or the antiallergen agent is applied to the functional layer by means of wet application, like impregnation and/or liquid coating.

## Support layer

Preferably, the filter medium according to the invention comprising additionally a support layer. The support layer is preferably selected from non-woven fabrics, woven fabrics, knitted fabrics and/or papers.

Preferably, the support layer is free of extraneous (added) antiallergen agent as defined herein and is free of extraneous (added) antiviral agent as defined herein. Preferably, the support layer contains 0.0 to 0.2 weight%, based on the total weight of the support layer, of the antiallergen agent as defined herein. Further, support layer contains 0.0 to 0.2 weight%, based on the total weight of the support layer, the antiviral agent as defined herein.

In one embodiment the filter medium according to the invention, is free of $C_8$ to $C_{18}$ fatty acids, esters of $C_8$ to $C_{18}$ fatty acids, amides of $C_8$ to $C_{18}$ fatty acids and mixtures thereof. Preferably, the filter medium contains 0.0 to 0.2 weight% based on the total weight of the filter medium $C_8$ to $C_{18}$ fatty acids, esters of $C_8$ to $C_{18}$ fatty acids, amides of $C_8$ to $C_{18}$ fatty acids and mixtures thereof.

Preferably, the support layer comprises at least one layer of nonwoven having a base weight (weight per unit area) of at least 20 g/m. Preferably, the base weight is in a range of 20 to 200 g/m$^2$, in particular 40 to 120 g/m$^2$. The weight per unit area can be determined in accordance with DIN EN 29073-1:1992-08.

## Adsorption layer

The filter medium comprises preferably an adsorption layer.

According to the invention, the term "adsorption layer" is understood as meaning a layer comprises an adsorbent and optional adhesive. The adsorbent is preferably selected from the group consisting of activated carbon, zeolites, ion exchangers and mixtures thereof. In a preferred embodiment, the adsorbent comprises activated carbon. Especially, the adsorbent consists of activated carbon.

The adsorbent is advantageously arranged in the adsorption layer in a statistically irregular manner as a flow-through packed bed on the carrier material. Nonwoven fabrics, woven fabrics, knitted fabrics and/or papers can preferably be used as carrier materials for the adsorption layer.

The employed activated carbon can be obtained for example from wood or coal, can be polymer-based, tar-based, or based on coconut shells, preferably based on coconut shells.

In one embodiment, the activated carbon has a BET surface area of greater than 600 m$^2$/g, preferably greater than 800 m$^2$/g (preferably measured according to DIN ISO 9277:2003-05). In this way, a satisfactory adsorption can be ensured within a small space.

Likewise conceivable is the impregnation and/or coating of the adsorption layer with a mixture of adhesive. For example, the adsorption layer may comprise a thermoplastic adhesive containing the absorbent.

The adhesive diamenter is of 50 to 1500 $\mu$m, preferably 100 to 1000 $\mu$m.

Preferably, the adsorption layer is arranged between the functional layer and the support layer.

If the functional layer is coated by the antiviral agent and the antiallergen agent respectively, the coat of the antiviral agent and the antiallergen agent respectively is located on the side/surface away from the adsorption layer.

A further subject matter of the present invention is a filter arrangement comprising a filter medium as described above. In a preferred embodiment of the invention, the filter arrangement comprises a particle-filtering region and/or an absorbing region, wherein the filter medium can be comprised by one or both of these regions.

In a particularly preferred embodiment of the invention, during the production of the filter medium, the functional layer is treated with a surface-active substance as wetting agent, preferably with one or more non-ionic surfactants as wetting agent, more preferably with ethoxylated sorbitane fatty acid esters (polysorbates) before and/or at the same time as the application of the antiviral agent or/and the antiallergen agent respectively. Polysorbates are particularly preferred which are authorized as a food additive in the European Union based on REGULATION (EG) No. 1333/2008 OF THE

EUROPEAN PARLIAMENT AND COUNCIL of 16 Dec. 2008, for example E432, E434, E435 and E436. This measure can provide the filter medium with a further functionality. An advantage of the use of wetting agents is that the antiviral agent and/or the antiallergen agent can be anchored particularly effectively on their layers. This allows a good immobilization and deactivation of the allergens and viruses. With regard to the use of odor-intensive active ingredients, the surface-active substance affords the additional advantage that the release of odor can also be reduced due to the immobilization of these substances.

The filter medium can also contain fungicidal active ingredients. For this purpose, the functional layer can be treated with a fungicidal substance, preferably with triazoles such as in particular 2-octyl 2H isothiazol-3-one and/or metals and the compounds thereof, for example zinc pyrethiones, before and/or at the same time as the application of the antiviral agent and/or the antiallergen agent.

The filter medium can be present in one or multiple layers. The filter medium according to the invention is outstandingly suitable for the production of filters, in particular for supply air filters for buildings, car interior supply air filters and/or room air filters.

The invention further relates to a method for depleting viruses and allergens from air or other gases, the method comprising:

- introducing air or gas enriched with viruses and/or allergens into a filter device comprising at least one filter medium as defined above,

- passing the air or gas through the filter medium or bringing the air or gas into contact with the filter medium to obtain air depleted of viruses and/or allergens or gas depleted of viruses and/or allergens,

- releasing the air depleted of viruses and/or allergens or the gas depleted of viruses and/or allergens from the filter device.

Preferably, the depletion of the viruses and/or allergens in the air or other gases is carried out by air circulation.

A further embodiment is the use of a filter medium as defined above, for depleting viruses and/or allergens from air and other gases.

The filter medium is excellently suited for use as a filter medium for depleting viruses and/or allergens, in particular from the air of buildings, parts of buildings and mobile equipment. On the one hand, this includes the air exchanged between the building, the part of the building or the mobile equipment and the outside world, specifically the fresh air supplied (e.g., outside air) and the exhaust air discharged (e.g., exhaust air). In order to protect the people located in the building, building part, or mobile equipment, the fresh air is generally filtered in order to reduce the proportion of viruses against the outside air. This furthermore includes the air circulated in the building, the building part, or the mobile equipment (i.e., circulating air). In order to reduce the amount of pathogens and/or allergens, especially viruses, in the room air, the circulating air is usually filtered as well. In order to protect the people located outside the building, building part or the mobile equipment, it may also be expedient to filter the discharged outgoing air. In a preferred embodiment, the filter medium is used in a room air conditioning system. These include systems without a ventilation function, such as recirculation systems and recirculation air conditioning systems, and systems with a ventilation function, such as ventilation systems and air conditioning systems. In another preferred embodiment, filter media is used in an air handling system of a transportation device, such as road vehicles, rail vehicles, watercraft or aircraft. The transportation device is preferably selected from passenger cars, buses, trucks, trains, ships and aircraft. Preference is given to the use of the filter medium according to the invention for the removal of pathogens and/or allergens, in particular viruses, in the interiors of transportation devices, such as road vehicles, rail vehicles, water vehicles or aircraft. Particularly preferred is the use of the filter medium according to the invention for the removal of pathogens and/or allergens, especially viruses, in the passenger compartments of motor vehicles.

Advantageously, the loaded filter medium also essentially has no more viral/allergenic material. Used filter materials can thus be disposed of without any problems according to usual procedures, e.g., thermally.

Viruses and bacteria may be present in the air and in other gases in the form of aerosols (i.e., particulate suspended particles), where the viruses and bacteria themselves may form the aerosol particles or may be attached to other particulate aerosol components, such as dust, water droplets, etc. Filters in ventilation systems are usually in the form of filter arrangements that comprise several filter components and often have particle-filtering areas in addition to absorbing areas. It is thus possible to also effectively clean complex gas-particle systems. The flat arrangement is advantageously suitable as a filter medium for use in such filter arrangements.

In a particularly preferred embodiment of the invention, the filter arrangement comprises the following components:

A) a particle-filtering region comprising

- a particle filter carrier layer, and
- a microfiber layer and/or membrane filter layer arranged on the particle filter carrier layer,
- optionally a cover layer arranged on the side of the microfiber layer and/or membrane filter layer facing away from the particle filter carrier layer; and/or

B) an absorbent region comprising

- an adsorption layer, and
- an adsorption carrier layer arranged on the adsorption layer, wherein at least one layer selected from particle filter carrier layer, microfiber layer, membrane filter layer, cover layer, adsorption layer and adsorption carrier layer is composed of a filter medium as described above.

According to the invention, "particle filter carrier layer" is understood as meaning a layer which can be used as a carrier layer for a microfiber layer and/or for a membrane filter layer.
According to the invention, "membrane filter layer" is understood as meaning a layer which is a permeable membrane.
According to the invention, "cover layer" is understood as meaning a layer which can be used for covering and protecting the microfiber layer and/or the membrane filter layer.
According to the invention, "adsorption carrier layer" is understood as meaning a layer which can be used as a carrier layer for the adsorption layer.
The adsorbing region of the filter medium can also consist of a geometrically determined arrangement of the adsorbent, for example as a flow-through honeycomb body of a defined cell shape and/or the use of a geometrically defined carrier structure for mechanically stabilizing an adsorption layer.
The invention will be illustrated further with reference to the examples that follow, without restricting the scope to the specific embodiments described. The invention includes all combinations of described and especially of preferred features that do not exclude each other.

DESCRIPTION OF THE DRAWINGS

Figure 1 shows filter medium, wherein

A: is support layer
B: is adsorption layer comprising activated carbon as adsorbent
C: is functional layer comprising an antiviral agent, and an antiallergen

EXAMPLES

A filter material according to the invention (carrier material is a non-woven fabric of polyester spunbonded non-woven, weight per unit area 125 g/m$^2$) is finished in an allergen-deactivating manner with tannic acid and a viral-deactivating manner with citric acid (1-5 g/m$^2$). The allergen-deactivating treatment and viral-deactivating treatment of the non-woven carrier material is carried out by applying a mixture of the active ingredients in aqueous solution to the non-woven carrier and subsequently drying the thus finished non-woven fabric to obtain a sample for analysis.

A) Antiallergen effect

In the examples, ELISA (enzyme-linked immunosorbent assay) is used as a method for measuring the deactivation abilities of different active ingredient compositions in respect of particular allergens.
The ELISA method can measure allergen concentrations by assessing colour changes due to antigen-antibody reactions.
Each example is based on tests using the active ingredients mentioned according to the invention in different weight proportions for specific allergens.

1. Sample Preparation

The size of the sample used in the test is 10 mm × 10 mm.

1.1 Preparation of the Antigen-Containing Starting Solution

Allergen sources used and antigens to be tested:

a) Allergen birch pollen: Antigen Bet v1

To prepare a test allergen solution of a defined starting concentration, each allergen source is dissolved in PBS buffer solution (phosphate buffered saline) according to the specifications of the ELISA kit manufacturer, Indoor Biotechnologies UK, to thereby produce a test allergen solution having a defined starting antigen content. Other reagents are used according to the specifications of the ELISA kit manufacturer.

1.2 Testing the Filter Medium for the Allergen-Deactivating Efficiency Thereof

A defined amount of the respective pollen allergen (standard of the respective ELISA) in 1 mL buffer is incubated for 24 h at room temperature with 5 filter pieces (10 mm×10 mm). The supernatant is analysed after this 24 h for the remaining allergen content (see table 1).

The ELISA is performed as described in the ELISA protocol and the optical density (OD) is measured in a photometer. The allergen amount from measured OD is calculated with suitable analysis software.

1.3 Measurement of the Test Results

To determine the allergen-deactivating efficiency, each antigen concentration of the sample reaction solution is determined according to the specifications of the ELISA kit manufacturer using a microplate reading device at a wavelength of 405 nm.

Allergen content:

Antigen Bet v1 detection limit 0.39 ng/ml
Analysis of pollen allergen after incubation with filter material: 93.69 % (max. valid measurable reduction by the sample)

Approach 1:

| | Applied allergen [ng/ml] | Applied allergen [ng/ml] | 24h control solution | Allergen amount after treatment with filter medium according to the invention [ng/ml] | Allergen reduction by with filter medium according to the invention [ng/ml] | Allergen reduction by with filter medium according to the invention [%] |
|---|---|---|---|---|---|---|
| Bet v1 | 1.12 | 5.60 | 6.53 | 0.18 | 6.35 | 97.23 |

Approach 2:

| | Applied allergen [ng/ml] | Applied allergen [ng/ml] | 24h control solution | Allergen amount after treatment with filter medium according to the invention [ng/ml] | Allergen reduction by with filter medium according to the invention [ng/ml] | Allergen reduction by with filter medium according to the invention [%] |
|---|---|---|---|---|---|---|
| Bet v1 | 1.12 | 5.60 | 6.53 | 1.42 | 5.11 | 78.32 |

The filter medium according to the invention shows an allergen reduction within 24 h for the tested pollen allergen of up to 97%.

B) Antiviral effect

The examination regarding the antiviral activity was performed on the basis of the plaque assay described within ISO 18184:2019 ("Textiles - Determination of antiviral activity of textile products").

The size of the sample used in the test is 20 mm×20 mm.

The samples and reference samples were inoculated with 0.2 ml of phage suspension with a concentration of 107 PFU/ml (PFU= Plaque forming unit).

The samples and half of the reference samples were placed in sterile, sealed tubes and incubated at a temperature of 25 ± 1 °C for 120 min. The other half of the reference samples was immediately extracted and the PFU count determined with double layer method on phage nutrient agar after an incubation period of 24 h at 25 ± 1 °C. After 120 min of incubation, the samples and the remaining reference samples were also extracted and the PFU count determined with double layer method on phage nutrient agar after an incubation period of 24 h at 25 ± 1 °C. During testing Pseudomonas sp. DSM 21482 was used as the host strain for Pseudomonas phage phi6 (Pseudomonas phage phi6) DSM 21518. Cystoviridae like phage phi6 are good model systems for testing of antiviral activity.

The antiviral efficacy value *Mv* is calculated from the difference between the growth value on the reference sample and the growth value on the test samples with an antiviral treatment, using the following formula:

$$Mv = \lg(Va/Vc) = \lg(Va) - \lg(Vc)$$

*Mv* is the antiviral activity value;
lg(*Va*) is the common logarithm average of 3 infectivity titre value immediate after inoculation of the control sample (reference sample);
lg(*Vc*) is the common logarithm average of 3 infectivity titre value after 2 h contacting with the antiviral fabric specimen (test sample).

For test verification the reduction M is calculated from the difference between the growth value on the reference sample immediately after inoculation and the growth value on the reference sample after 2 h contacting time, using the following formula:

$$M = \lg(Va/Vb) = \lg(Va) - \lg(Vb)$$

M is the reduction value;
lg(*Va*) is the common logarithm average of 3 infectivity titre value immediate after inoculation of the control sample (reference sample);
lg(*Vb*) is the common logarithm average of 3 infectivity titre value after 2 h contacting with the control specimen (reference sample).

According to ISO 18184:2019 ("Textiles - Determination of antiviral activity of textile products") the reduction value M calculated shall not exceed 1.0.

The individual results of the tested filter media are shown in Table 1. The reduction value calculated for test verification is given in Table 2. As per norm ISO 18184:2019 the antiviral performance of the samples can be assumed according to Table 3. If the calculation results in a negative value for the antiviral activity, then the value is set to 0.0 [log].

Table 1: Results of antiviral activity against Pseudomonas phage phi6

| | Antiviral efficacy value Mv (After 2h incubation) [LOG] | Antiviral efficacy value Mv (After 2h incubation) [%] |
|---|---|---|
| Sample according to the invention (treated) | 5.1 | 99.999 |

Table 2: Results of reduction value (for test verification)

| | Criteria for reduction according to ISO 18184:2019 | Reduction value M (After 2h contact) |
|---|---|---|
| Sample according to the invention (untreated) | ≤ 1.0 | 0.1 |

Table 3: Antiviral performance standard (as per Table F.1 of ISO 18184:2019)

| | Antiviral efficacy value, Mv | Standard |
|---|---|---|
| Tested filter medium | 3.0 > Mv ≥ 2.0 | Good effect |
| | Mv ≥ 3.0 | Excellent effect |

## Claims

**1.** A filter medium, comprising:

- at least one nonwoven carrier material, comprising a sheet-like material;
- a functional layer, comprising at least one antiallergen agent, selected from polyphenols, and at least one antiviral agent, selected from fruit acids having a pka1 value of 0 to 7.

**2.** The filter medium according to claim 1, which is free of $C_8$ to $C_{18}$ fatty acids, esters of $C_8$ to $C_{18}$ fatty acids, amides of $C_8$ to $C_{18}$ fatty acids and mixtures thereof.

**3.** The filter medium according to any of the preceding claims, wherein the carrier material is selected from nonwovens, wovens, knits, papers and combinations thereof.

**4.** The filter medium according to any of the preceding claims, wherein carrier material comprises or consists of nonwoven having a base weight of at least 20 g/m$^2$, preferably 20 to 200 g/m$^2$, in particular 40 to 120 g/m$^2$.

**5.** The filter medium according to any of the preceding claims, wherein the functional layer is biofunctional.

**6.** The filter medium according to any of the preceding claims, wherein the functional layer contains the antiviral agent in an amount from 1 wt % to 30 wt % based on the total weight of the functionalized layer, preferably 2 to 20 wt% based on the total weight of the functionalized layer.

**7.** The filter medium according to any of the preceding claims, wherein the functional layer contains the polyphenols in an amount from 1 wt % to 30 wt % based on the total weight of the functional layer, preferably 2 to 20 wt% based on the total weight of the functionalized layer.

**8.** The filter medium according to any of the preceding claims, wherein the antiviral agent is selected from malic acid, fumaric acid, gluconic acid, glycolic acid, mandelic acid, lactic acid, oxalic acid, salicylic acid, $\alpha$-hydroxycaprylic acid, tartaric acid, citric acid and mixtures thereof, preferably the antiviral agent comprises or consists of citric acid.

**9.** The filter medium according to any of the preceding claims, wherein the polyphenols are selected from flavonoids, tannins, derivatives thereof and mixtures thereof, preferably the polyphenols are selected from tannins and derivatives thereof, in particular the polyphenols comprise or consist of tannins.

**10.** The filter medium according to any of the preceding claims, wherein the functional layer comprises the at least one antiallergene agent and at least one antiviral agent in at least two distinct layers.

**11.** The filter medium according to any of the preceding claims, wherein the functional layer additionally contains at least one additive different from fruit acids and polyphenols, preferably selected from fungicides, anti-pathogenic substances, antibacterial substances and mixtures thereof.

**12.** The filter medium according to any of the preceding claims, additionally comprising a support layer.

**13.** The filter medium according to any of the preceding claims, comprising at least one gas adsorption layer, which is arranged between the functionalized layer and the support layer.

**14.** The filter medium according to any of the preceding claims, wherein the support layer comprises a nonwoven having a base weight of at least 20 $g/m^2$, preferably 20 to 200 $g/m^2$, in particular 40 to 120 $g/m^2$.

**15.** The filter medium according to any of the preceding claims, further comprising at least one adsorption layer, comprising at least one absorbent and optional at least one adhesive.

**16.** The filter medium according to claim 13, wherein the adsorbent is selected from activated carbon, ion-exchange resins, zeolites and mixtures thereof.

**17.** A method for depleting viruses and allergens from air or other gases, the method comprising:

- introducing air or gas enriched with viruses and/or allergens into a filter device comprising at least one filter medium as defined in any of claims 1 to 16,
- passing the air or gas through the filter medium or bringing the air or gas into contact with the filter medium to obtain air depleted of viruses and/or allergens or gas depleted of viruses and/or allergens,
- releasing the air depleted of viruses and/or allergens or the gas depleted of viruses and/or allergens from the filter device.

**18.** The method according to claim 17, wherein the depletion of viruses and/or allergens in the air or the depletion of viruses and/or allergens in other gases is carried out by air circulation.

**19.** Use of a filter medium as defined in any of claims 1 to 16, for depleting viruses and/or allergens from air and other gases.

**20.** A filter arrangement comprising a filter medium as defined in any one of claims 1 to 16.

Figure 1:

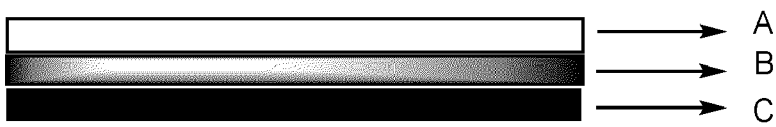

Europäisches Patentamt
European Patent Office
Office européen des brevets

# EUROPEAN SEARCH REPORT

Application Number
EP 24 18 9940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/152533 A1 (STAHL ULRICH [DE] ET AL) 19 May 2022 (2022-05-19)<br>* paragraphs [0023], [0091] - [0093], [0112]; claims 1,5, 8, 11-13 *<br>----- | 1-20 | INV.<br>B01D39/08<br>B01D39/16 |
| A | US 2022/134267 A1 (NICHOLS JON GARTH [US] ET AL) 5 May 2022 (2022-05-05)<br>* claims 10-11 *<br>----- | 1 | |

TECHNICAL FIELDS SEARCHED (IPC)

B01D

The present search report has been drawn up for all claims

| Place of search | Date of completion of the search | Examiner |
|---|---|---|
| The Hague | 6 January 2025 | Artos Fernández, V |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 18 9940

This annex lists the patent family members relating to the patent documents cited in the above-mentioned European search report. The members are as contained in the European Patent Office EDP file on
The European Patent Office is in no way liable for these particulars which are merely given for the purpose of information.

06-01-2025

| Patent document cited in search report | Publication date | Patent family member(s) | Publication date |
|---|---|---|---|
| US 2022152533 A1 | 19-05-2022 | CN 114588711 A | 07-06-2022 |
| | | DE 102020130584 A1 | 19-05-2022 |
| | | US 2022152533 A1 | 19-05-2022 |
| US 2022134267 A1 | 05-05-2022 | CA 3198443 A1 | 05-05-2022 |
| | | US 2022134267 A1 | 05-05-2022 |
| | | WO 2022090974 A1 | 05-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170120178 A
- US 20220008854 A
- US 20220152533 A
- WO 2018225062 A
- WO 2015091822 A
- US 5888527 A
- DE 102015103284
- US 20130183879 A